# DEMANDE DE BREVET EUROPEEN

(11) **EP 4 644 494 A1**
(43) Date de publication de la demande: **05.11.2025**
(21) Numéro de dépôt: 25172260.9
(22) Date de dépôt: 24.04.2025
(51) Int. Cl.: C09D 5/00, B32B 5/18, B32B 27/04, B32B 27/06

(54) **REVÊTEMENT DE DÉCONTAMINATION DE COMPOSÉS CHIMIQUES TOXIQUES**

(30) Priorité: 30.04.2024 FR 2404534
(71) Demandeur: Commissariat à l'Energie Atomique et aux Energies Alternatives, 75015 Paris (FR); Howa Tramico, 27800 Brionne (FR)
(72) Inventeur: BLONDEL, Benoit, 38054 Grenoble cedex 09 (FR); RAMEAU, Nelly, 38054 Grenoble cedex 09 (FR); CADRA, Stéphane, 38054 Grenoble cedex 09 (FR); BACOUP, Stéphane, 27800 BRIONNE (FR); BONNEROT, Vincent, 27800 BRIONNE (FR); MOUGNARD, Laurent, 27800 BRIONNE (FR)
(74) Mandataire: Germain Maureau

(57) **Abrégé**

Un revêtement de décontamination (100,100') comprend une structure multicouche comportant un support (1), une couche de piégeage (3) destinée à être mise en contact avec les composés chimiques toxiques de sorte à les piéger, et un film de maintien (4) destiné à maintenir la forme du support (1) dans le plan et dans une direction transversale au plan, pendant la formation de la couche de piégeage (3). Il est aussi décrit un procédé de fabrication du revêtement de décontamination (100,100').

## Description

### Domaine technique de l'invention

La présente invention a trait au domaine de la décontamination de surface contaminée par des composés chimiques toxiques. En particulier, la présente invention concerne un revêtement de décontamination destiné à piéger des composés chimiques toxiques. Selon un deuxième aspect, la présente invention vise un ensemble de décontamination comprenant le revêtement de décontamination et un dispositif de conditionnement dédié. Selon un troisième aspect, la présente invention vise un procédé de fabrication dudit revêtement de décontamination. Les composés toxiques peuvent être des composés chimiques organophosphorés et l'invention peut trouver application dans la décontamination de milieux comprenant des composés chimiques organophosphorés, par exemple, dans certains environnements, comme l'industrie chimique, l'agriculture ou encore dans des secteurs de lutte contre les attaques au gaz chimique, tels que des gaz dérivés d'organophosphorés de combat de type G et V.

Ces composés peuvent être compris dans la formulation d'insecticides, de pesticides ou encore d'agents chimiques de combat et se présentent classiquement sous forme de composés organiques huileux hydrosolubles qui, une fois dispersés dans l'environnement, présentent une durée de demi-vie dans l'eau pouvant aller de 5 heures à 80 heures, avec toutefois le risque que les produits de dégradation par hydrolyse dans l'eau restent toxiques pendant une durée de 30 à 60 jours.

### Etat de la technique

Au vu de leur toxicité, de nombreuses recherches ont été entreprises pour mettre au point des solutions curatives aux menaces liées aux composés organophosphorés, un des axes de ces recherches visant à trouver des systèmes pour piéger et/ou dégrader ces composés, afin de les rendre rapidement inactifs. Ces systèmes décontaminants se présentent généralement sous forme de liquides ou de poudres utilisés sous forme de sprays ou encore sous forme d'hydrogel qui vont pouvoir intégrer, par diffusion naturelle et miscibilité naturelle, les agents toxiques chimiques.

Toutefois, ces systèmes décontaminants, bien que performants, nécessitent d'être améliorés pour assurer une bonne reproductibilité de la phase de décontamination. En effet, l'application sous forme de gel, de spray ou de pulvérisation ne permet pas un dosage optimal et homogène des matériaux décontaminants sur les surfaces à traiter. En condition d'utilisation, l'utilisateur peut ne pas être certain que la quantité de décontaminant appliquée est suffisante et il aura tendance à appliquer davantage de matériaux décontaminants qu'il n'est réellement nécessaire.

### Objet de l'invention

Ainsi, l'un des buts de la présente invention consiste à pallier au moins un des inconvénients précités. A cet effet, la présente invention propose un revêtement de décontamination destiné à piéger des composés chimiques toxiques, tels que des composés organophosphorés de combat de type G et V, notamment par confinement et séquestration, par recouvrement d'une surface contaminée avec le revêtement de décontamination, le revêtement de décontamination comprenant une structure multicouche comportant:
- un support, notamment un support poreux et flexible,
- une couche de piégeage formée sur une face supérieure du support, la couche de piégeage étant destinée à être mise en contact avec les composés chimiques toxiques de sorte à les piéger, par exemple par adsorption et/ou par une réaction chimique de dégradation, et
- un film de maintien solidarisé à une face inférieure du support, opposée à la face supérieure, le film de maintien étant destiné à maintenir la forme du support dans le plan et dans une direction transversale au plan, pendant la formation de la couche de piégeage.

Ainsi configuré, le revêtement de décontamination assure une utilisation facile et des résultats de décontamination reproductibles et fiables. Grâce à la présence du support, la substance active peut être déposée dans des conditions et des quantités reproductibles, pour être utilisée sous forme de couche déjà préparée au préalable. La présentation de la substance active dans une structure multicouche rend possible de couvrir de façon adéquate une surface contaminée, notamment en permettant un contact avec l'ensemble de la surface contaminée. Les quantités et la nature des matériaux constitutifs sont ainsi optimisés pour une efficacité optimale, notamment en confinant ou séquestrant les composés organosphorés.

L'utilisation du revêtement de décontamination comprend une simple mise en contact réalisée par disposition du revêtement de décontamination sur la surface à décontaminer moyennant quoi ladite surface est appauvrie très rapidement, voire dénuée des contaminants susmentionnés.

Par la phrase « le film de maintien est destiné à maintenir la forme du support dans le plan et dans une direction transversale au plan », on entend que le film de maintien permet d'éviter les déformations du support dans le plan et dans une direction transversale au plan.

Selon une possibilité, le film de maintien est un film hydrophobe de sorte à ne pas adhérer aux surfaces sur lesqelles le revêtement de décontamination est disposé pendant sa fabrication, et lors de manipulation dans la phase de mise en place du revétements sur les surfaces à décontaminer.

Le film de maintien est par exemple un film teflonné ou siliconé. Ceci permet également un enroulement du revêtement de décontamination sur lui-même, en vue de son conditionnement et de son transport sur site.

Selon une disposition, la couche de piégeage est une couche d'hydrogel formée par :
- dépôt d'une solution précurseur de la couche de piégeage, sur la face supérieure du support, et
- polymérisation de la solution précurseur,
la solution précurseur comprenant au moins un solvant protique, tel que de l'eau, au moins un monomère comprenant un groupe (alkyl)acrylique, (alkyl)acrylate ou (alkyl)acrylamide, au moins un agent de réticulation comprenant au moins deux groupes choisis parmi les groupes (alkyl)acrylique, (alkyl)acrylate ou (alkyl)acrylamide, au moins un amorceur de photo-polymérisation et au moins un agent choisi parmi les halogénures alcalins, les phosphates alcalins, les sulfates alcalins et les mélanges de ceux-ci.

Ainsi, la couche de piégeage issue de la polymérisation du ou des monomères et du ou des agents de réticulations définis ci-dessus, piège en son sein, une phase liquide comprenant un agent précité. Lorsque la phase liquide comprend, comme solvant protique, de l'eau, le matériau polymérique susmentionné peut être qualifié de matériau hydrogel.

Autrement dit le matériau hydrogel est un matériau se présentant sous la forme d'un gel constitué d'un polymère dans lequel est retenue une phase aqueuse, qui correspond classiquement au milieu de polymérisation (c'est-à-dire le milieu dans lequel a eu lieu la polymérisation pour former le polymère constitutif du matériau hydrogel), qui a absorbé, dans notre cas de figure, les composés organophosphorés. De par la flexibilité du réseau polymère constituant l'hydrogel, un tel matériau est capable classiquement d'absorber une masse en eau pouvant dépasser de 100 fois la masse de l'édifice polymère et, dans notre cas de figure, au moins 5 fois la masse de l'édifice polymère.

L'étape de formation de la couche d'hydrogel peut être réalisée par application d'un rayonnement initiant la photo-polymérisation grâce à l'action des amorceurs de photo-polymérisation autrement dénommé ici agent de réticulation. Ce rayonnement peut appartenir, avantageusement, au domaine des rayonnements ultraviolets, c'est-à-dire des rayonnements présentant au moins une longueur d'onde du domaine des ultraviolets, soit une longueur d'onde comprise entre 350 nm et 420 nm. L'intensité du rayonnement peut être comprise entre 1000 et 10 000 W/m2. L'origine du rayonnement peut être naturelle (par exemple, l'exposition à la lumière naturelle du soleil) ou artificielle, telle que, par exemple, le rayonnement issu d'une lampe UV. A titre d'exemple, une source lumineuse artificielle utilisable dans le cadre de l'invention peut être une lampe UV émettant une longueur d'onde de 405 nm avec une puissance de 9000 W/m2 appliqué en direction de la solution précurseur déposée sur le support.

La couche d'hydrogel constitue un matériau de confinement des agents toxiques chimiques présents initialement sur la surface à décontaminer. Il est à noter également que, du fait de la réactivité de la solution vis-à-vis des composés organophosphorés, les composés organophosphorés piégés dans le gel peuvent être naturellement dégradés in situ.

Par le terme « solution », on précise qu'il s'agit d'un mélange liquide homogène des ingrédients susmentionnés, ce qui signifie que ceux-ci sont tous utilisés de sorte à être solubles dans le solvant pratique de la solution.

Par « solvant protique », on précise que l'on entend un solvant polaire présentant au moins un atome d'hydrogène susceptible d'intervenir dans la formation de liaisons hydrogène, un exemple de solvant protique particulièrement avantageux pour l'invention étant l'eau, auquel cas la solution de l'invention peut être qualifiée de solution aqueuse.

Le solvant protique, tel que l'eau, peut être présent dans la solution précurseur à hauteur de 40 à 60% en volume par rapport au volume total de la solution.

Par groupe (alkyl)acrylique, groupe (alkyl)acrylate ou groupe (alkyl)acrylamide, on précise que l'on entend respectivement :
- pour le groupe (alkyl)acrylique, un groupe acrylique ou un groupe alkylacrylique (ce qui signifie qu'un groupe alkyle est présent sur le carbone porteur de la double liaison et du groupe -CO-) ;
- pour le groupe (alkyl)acrylate, un groupe acrylate ou un groupe alkylacrylate (ce qui signifie qu'un groupe alkyle est présent sur le carbone porteur de la double liaison et du groupe -CO-) ; et
- pour le groupe (alkyl)acrylamide, un groupe acrylamide ou un groupe alkylacrylamide (ce qui signifie qu'un groupe alkyle est présent sur le carbone porteur de la double liaison et du groupe -CO-).Un exemple de groupe (alkyl)acrylique, groupe (alkyl)acrylate ou groupe (alkyl)acrylamide est respectivement un groupe (méth)acrylique, un groupe (méth)acrylate ou un groupe (méth)acrylamide.

Un exemple de groupe (alkyl)acrylique, groupe (alkyl)acrylate ou groupe (alkyl)acrylamide est respectivement un groupe (méth)acrylique, un groupe (méth)acrylate ou un groupe (méth)acrylamide.

Comme mentionné ci-dessus, la solution précurseur de l'invention comprend au moins un monomère comprenant un groupe (alkyl)acrylique, un groupe (alkyl)acrylate ou un groupe (alkyl)acrylamide, un tel monomère pouvant répondre à la formule (I) suivante : 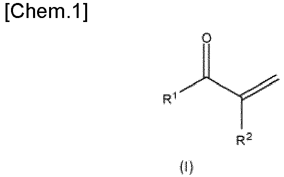 dans laquelle :
R₁ représente -OR' avec R' représentant un atome d'hydrogène ou un élément alcalin (comme le sodium ou le potassium) ; -OR₃ avec R₃ représentant un groupe alkyle, de préférence, comprenant de 1 à 4 atomes de carbone (tel qu'un groupe méthyle, un groupe éthyle) ; ou -NR₄R₅ avec R₄ et R₅ représentant, indépendamment l'un de l'autre, un atome d'hydrogène ou un groupe alkyle, de préférence, comprenant de 1 à 4 atomes de carbone (tel qu'un groupe méthyle, un groupe éthyle) ;
R₂ représente un atome d'hydrogène ou un groupe alkyle, de préférence, comprenant de 1 à 4 atomes de carbone (tel qu'un groupe méthyle, un groupe éthyle).

Avantageusement, le ou les monomères de l'invention comprennent un groupe (alkyl)acrylamide, tels que ceux répondant à la formule (II) suivante : 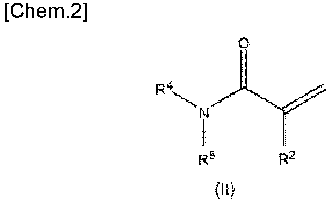 dans laquelle :
R₄ et R₅ sont tels que définis ci-dessus ;
R₂ est tel que défini ci-dessus.

En particulier, il peut s'agir d'un monomère de formule (II), dans lequel R₂ est un atome d'hydrogène et R₄ et R₅ représentent un groupe méthyle, un tel monomère correspondant au N,N'-diméthylacrylamide.

Le ou les monomères peuvent être présents dans la solution précurseur à hauteur de 40 à 60% en volume par rapport au volume total de la solution. A titre d'exemple, lorsque le monomère est le N,N'-diméthylacrylamide, il peut être présent à hauteur de 47,8% en volume par rapport au volume total de la solution précurseur.

La solution précurseur de l'invention comprend également au moins un agent de réticulation comprenant au moins deux groupes choisis parmi les groupes (alkyl)acryliques, (alkyl)acrylates, (alkyl)acrylamides, ce qui signifie en d'autres termes qu'il s'agit d'un composé comprenant, par exemple :
- au moins deux groupes (alkyl)acryliques ;
- au moins deux groupes (alkyl)acrylates ;
- au moins deux groupes (alkyl)acrylamides ;
- au moins un groupe (alkyl)acrylique et au moins un groupe (alkyl)acrylate ;
- au moins un groupe (alkyl)acrylique et au moins un groupe (alkyl)acrylamide ; ou
- au moins un groupe (alkyl)acrylate et au moins un groupe (alkyl)acrylamide.

Avantageusement, le ou les agents de réticulation sont des agents comprenant au moins deux groupes (alkyl)acrylates, tels que ceux répondant à la formule (III) suivante : 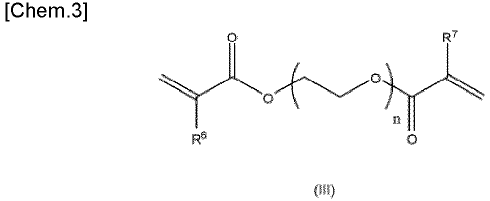 dans laquelle :
R₆ et R₇ représentent, indépendamment l'un de l'autre, un atome d'hydrogène ou un groupe alkyle, par exemple, comprenant de 1 à 4 atomes de carbone (par exemple, un groupe méthyle, un groupe éthyle) ;
n correspond au nombre d'occurrence du motif pris entre parenthèse, ce nombre allant de 1 à 15.

A titre d'exemple, un agent de réticulation utilisable dans la solution précurseur de l'invention est un agent de formule (III), dans laquelle R₆ et R₇ sont des groupes méthyles, cet agent correspondant ainsi à un di-méthacrylate de polyéthylène glycol.

Il est tout à fait envisageable d'utiliser plusieurs agents de réticulation distincts entrant dans le cadre de la définition des agents de formule (III) définie ci-dessus.

Il s'entend également que les agents de réticulation sont distincts des monomères utilisés dans la solution précurseur de l'invention.

En particulier, il peut être utilisé un mélange de diméthacrylate de polyéthylèneglycol de masse molaire moyenne de 750 g/mol, ce qui correspond à un mélange de plusieurs molécules de formule (III) définie ci-dessus, avec un nombre d'occurrence moyen du motif éthylèneglycol de 13,2. Le ou les agents réticulants peuvent être présents dans la solution précurseur à hauteur de 1 à 5% en volume par rapport au volume total de la solution.

Lorsqu'il s'agit du mélange de diméthacrylate de polyéthylèneglycol susmentionné, ce mélange peut être présent dans la solution précurseur à hauteur de 1,6% en volume par rapport au volume total de la solution.

Enfin, la solution précurseur comprend au moins un amorceur de photo-polymérisation (pouvant également être dénommé photoamorceur), lequel amorceur est un composé capable de générer des radicaux libres, lorsqu'il est soumis à un rayonnement approprié (par exemple, un rayonnement UV compris entre 350 et 420 nm). Les radicaux ainsi formés vont ainsi réagir avec les sites réactifs des composés présents dans la solution (ici, les fonctions polymérisables des monomères et des agents de réticulation) entraînant ainsi la polymérisation de ces composés. Ce ou ces amorceurs sont, avantageusement, solubilisés par au moins un des ingrédients constitutifs de la solution précurseur (par exemple, le solvant protique).

Le ou les amorceurs de photo-polymérisation susceptibles d'être utilisés dans la solution précurseur de l'invention peuvent être des amorceurs de la famille des cétones aromatiques, tels que le 1-hydroxy-cyclohexylphénylcétone (connu également sous les appellations commerciales IRGACURE^{®} 184 ou CPK^{®}) ou le (phénylphosphoryl)bis(mésitylméthanone) (connu sous l'appellation IRGACURE^{®} 819) ou un mélange de ces deux photoamorceurs.

Le ou les amorceurs de photo-polymérisation peuvent être présents dans la solution précurseur à hauteur de 1 à 15 g/L. A titre d'exemple, lorsque l'amorceur est l'IRGACURE^{®} 184, il peut être présent à hauteur de 11,5 g/L.

Pour finir, la solution précurseur comprend au moins un agent choisi parmi les halogénures alcalins, les phosphates alcalins, les sulfates alcalins et les mélanges de ceux-ci.

Les auteurs de l'invention ont constaté que ces agents contribuent à neutraliser les composés organophosphorés et, notamment, des composés organophosphorés de combat de type V, qui sont des composés comprenant un atome de soufre, qui est connecté à un groupe phosphonate, les agents susmentionnés étant aptes à couper les liaisons phosphore-soufre pour en accélérer l'hydrolyse.

En outre, les agents susmentionnés permettent d'augmenter la force ionique de la solution les contenant, ce qui permet, entre autres, d'augmenter le pouvoir séquestrant des composés organophosphorés par pression osmotique.

Le ou les agents peuvent être présents dans la solution précurseur à hauteur de 1 à 30 g/L, de préférence de 1 à 15 g/L.

Plus spécifiquement, le ou les agents peuvent être choisis parmi les fluorures alcalins, le ou lesquels fluorures alcalins peuvent être présent(s) dans la solution précurseur à hauteur de 1 à 15 g/L.

Un agent particulièrement efficace et utilisable dans la solution précurseur de l'invention est le fluorure de potassium, lequel peut être, par exemple, présent dans la solution à hauteur de 11,5 g/L.

A titre d'exemple, la solution précurseur de l'invention peuvent être composées exclusivement d'au moins un solvant protique, d'au moins un monomère comportant un groupe (alkyl)acrylique, (alkyl)acrylate ou (alkyl)acrylamide, d'au moins un agent de réticulation comprenant au moins deux groupes choisis parmi les groupes (alkyl)acrylique, (alkyl)acrylate ou (alkyl)acrylamide, d'au moins un amorceur de photo-polymérisation et d'au moins un agent choisi parmi les halogénures alcalins, les phosphates alcalins, les sulfates alcalins et les mélanges de ceux-ci.

Une solution précurseur conforme à l'invention est une solution comprenant et/ou qui est constituée exclusivement des ingrédients suivants :
- comme solvant protique, de l'eau ;
- comme monomère, du N,N'-diméthylacrylamide ;
- comme agent de réticulation, un diméthacrylate de polyéthylèneglycol ou un mélange de ceux-ci ;
- comme amorceur de photo-polymérisation, du 1-hydroxy-cyclohexylphénylcétone (connu également sous l'appellation commerciale IRGACURE^{®} 184);
- comme agent, du fluorure de potassium.

Selon une possibilité, le support est formé d'au moins une couche de polymère moussé. Ceci confère une grande souplesse au support de sorte que la structure multicouche est également souple et plane, ce qui facilite sa manipulation sur le site à décontaminer.

Selon une disposition, le support comprend une subsurface supérieure comportant une portion de couche de piégeage imprégnée dans le support. Cette imprégnation est obtenue sur quelques dixièmes de millimètres. Cette imprégnation est bénéfique car elle participe à assurer la solidarisation entre le support et la couche de piégeage. Comme on le verra par la suite lors de la description du procédé de fabrication, cette imprégnation est obtenue au dépôt d'une solution précurseur visqueuse de la couche de piégeage, par simple capillarité et effet de la pesanteur dans les pores du support avant traitement de polymérisation.

Selon une possibilité, le support est constitué d'un unique polymère.

La subsurface supérieure est constituée d'une portion d'épaisseur du support sous la surface supérieure et qui présente une épaisseur inférieure à 1 mm.

Selon une disposition, le support est formé d'au moins une couche de mousse de polyuréthane (PU). L'utilisation d'un tel matériau est avantageux car il est peu coûteux et sa fabrication est obtenue par un procédé bien connu.

Selon un mode de réalisation, le support 1 comprend un matériau non-tissé à base de polyester.

Selon une possibilité, le support présente une épaisseur comprise entre 1 et 10 mm, et notamment entre 2 et 7 mm, selon la maniabilité visée pour l'enroulement du revêtement de décontamination et la tenue mécanique recherchée.

Selon un mode de réalisation particulier, le support est un ensemble multicouche comprenant une couche supérieure et une couche inférieure adsorbante, la couche inférieure adsorbante étant apte à adsorber les composés chimiques toxiques. Ainsi, l'épaisseur augmentée de ce support multicouche, permet d'augmenter le pouvoir confinant du revêtement de décontamination. De plus, la couche inférieure complète l'effet de séquestration obtenu avec la couche de piégeage de composés toxiques en adsorbant les éventuels composés toxiques résiduels, notamment présent sous forme de gaz. Cette couche inférieure est ainsi apte à confiner les composés toxiques.

Selon une possibilité, l'ensemble multicouche comprend de la mousse de polyuréthane.

Selon une disposition, la subsurface de la couche supérieure de l'ensemble multicouche est imprégnée d'une portion de couche de piégeage.

Selon une possibilité, la couche inférieure adsorbante comprend et/ou est constituée d'une couche de mousse de polyuréthane imprégnée par un matériau poreux adsorbant.

Selon une disposition, le matériau adsorbant comprend et/ou est constitué de charbon actif.

Selon une possibilité, le revêtement de décontamination comprend un film de collage entre la couche inférieure adsorbante et la couche supérieure. Ainsi, les deux couches du support sont bien maintenues ensemble.

Selon une disposition, le film de collage est formé d'au moins un matériau polymère de type polyoléfine thermofusible à une température supérieure à 130°C. La nature du film de collage permet de coller simplement et efficacement la couche inférieure et la couche supérieure par application de chaleur favorisant l'adhésion.

Selon d'autres caractéristiques, le revêtement de décontamination de l'invention comporte une ou plusieurs des caractéristiques optionnelles suivantes considérées seules ou en combinaison :
- Le film de maintien est solidarisé à la face inférieure du support par l'intermédiaire d'un film adhésif.
- Le film adhésif comprend ou est constitué d'un matériau dérivé de polymères acryliques.
- L'épaisseur du film adhésif est inférieure ou égale à 1 mm.
- La couche de piégeage présente une épaisseur comprise entre 1 et 4 mm, et notamment entre 1,5 et 3 mm.
- Le support est monocouche.
- Le support en mousse de polyuréthane comprend des pores majoritairement ouverts.
- La mousse de PU est obtenue à partir d'un mélange de polyols et d'isocyanates.
- L'épaisseur de l'imprégnation par la couche de piégeage de la subsurface supérieure du support est de quelques dizaines de nanomètres.
- La mousse de PU de la couche inférieure est identique à la mousse PU de la couche supérieure dans l'ensemble bicouche.
- La mousse de PU présente une densité comprise entre 15 et 40 kg/m3 de sorte à conférer au revêtement la maniabilité nécessaire pour son utilisation et son conditionnement en position d'enroulement.
- Le support est un ensemble bicouche formé d'une couche supérieure, une couche inférieure adsorbante et un film de collage.
- La couche inférieure adsorbante présente une épaisseur comprise entre 0,5 et 3 mm.
- La couche supérieure présente une épaisseur comprise entre 1 et 4 mm, par exemple entre 1 et 3 mm.
- Le grammage de charbon actif dans la couche inférieure adsorbante est compris entre 50 et 500 g/m²..
- Le matériau thermofusible du film de collage est choisi parmi un matériau en polyester, en polyamide et/ ou une combinaison de ces matériaux.

Selon un deuxième aspect, l'invention propose un ensemble de décontamination comprenant le revêtement de décontamination tel que précédemment décrit et un dispositif de conditionnement pour la conservation du revêtement de décontamination, le dispositif de conditionnement étant formé par un ensemble multicouche comprenant au moins une couche d'aluminium et une couche de PET (PolyEthylène Téréphtalate).

Ainsi configuré, le dispositif de conditionnement permet de conserver le revêtement de décontamination à l'abri de la lumière pour une protection contre les rayons UV, de façon hermétique pour une absence de pénétration de l'humidité et sans adhérer au revêtement de décontamination pour ne pas l'endommager. Il est alors possible de garantir une conservation sur plusieurs mois du revêtement de décontamination.

Selon une possibilité, le dispositif de conditionnement est configuré pour être thermosoudable. Ceci permet d'introduire le revêtement de décontamination puis de le fermer de façon hermétique.

Selon une variante, le dispositif de conditionnement est muni d'une fermeture ZIP hermétique.

Selon une disposition, le dispositif de conditionnement comprend trois ou quatre couches laminées, lesdites couches sont en aluminium et en PET.

Par exemple, un dispositif de conditionnement de l'ensemble de décontamination selon l'invention comprend 12 microns de polyester (PET) externe, 12 microns aluminium (central) et 75 microns polyéthylène interne.

Des tests réalisés avec un dispositif de conditionnement tricouche tel que décrit ont en effet montré que ce dispositif de conditionnement permet de conserver le revêtement de décontamination pendant une année sans vieillissement, et donc sans perte de ses propriétés de piégeage.

Selon un troisième aspect, l'invention propose un procédé de fabrication du revêtement de décontamination tel que précédemment décrit, le procédé comprenant les étapes suivantes :
a) fourniture d'un film de maintien,
b) solidarisation de la face inférieure du support au film de maintien,
c) dépôt d'une solution précurseur de la couche de piégeage sur la face supérieure du support,
d) photo-polymérisation de la solution précurseur de sorte à obtenir la couche de piégeage.

Selon une possibilité, la solidarisation de la face inférieure du support au film de maintien est obtenue par l'intermédiaire du film adhésif déposé préalablement sur le film de maintien.

Le dépôt de la solution précurseur sur la face supérieure selon l'étape c) est réalisé de sorte à générer une imprégnation de la solution précurseur en subsurface supérieure du support pour former à l'étape d) une portion de couche de piégeage imprégnée dans le support. Cette disposition renforce l'adhérence entre le support et la couche de piégeage.

Selon une possibilité, le dépôt de la solution précurseur est réalisée par enduction sur le support. Selon la viscosité de la solution précurseur, la solution pénètre dans la subsurface supérieure du support. Par exemple, elle pénètre sur quelques dixièmes de millimètres d'épaisseur du support de sorte à obtenir la solidarisation des deux couches, notamment pour une utilisation aisée mais également pour pouvoir enrouler le revêtement sur lui-même pendant une phase de conditionnement.

Selon une disposition, la photo-polymérisation de la solution précurseur est réalisée par rayonnement, notamment par rayonnement ultraviolets, c'est-à-dire présentant une longueur d'onde du domaine des ultraviolets, soit une longueur d'onde comprise entre 350 et 420 nm. L'intensité du rayonnement peut être comprise entre 1000 et 10 000 W/m².

Selon une possibilité, le procédé comprend une étape i) réalisée avant l'étape b) de fourniture d'un support en mousse de polyuréthane comprenant un ensemble bicouche obtenu par collage via un film de collage entre une couche inférieure adsorbante et une couche supérieure.

Selon une possibilité, le procédé comprend avant l'étape i) une étape j) d'immersion de la couche inférieure en polymère moussé par une solution aqueuse de charbon actif comprenant un liant et un épaississant de sorte à former la couche inférieure adsorbante après séchage.

Selon une possibilité, l'étape j) est renouvelée une deuxième fois sur la couche inférieure imprégnée de charbon actif après séchage afin d'augmenter sa capacité d'adsorption en fonction des besoins visés.

Selon une disposition, le procédé de fabrication comprend une étape e) consistant à enrouler le revêtement sur lui-même, la couche de piégeage étant au contact du film de maintien, surfaces en contact direct, à des fins de conditionnement, notamment dans le dispositif de conditionnement précédemment décrit.

### Description sommaire des dessins

D'autres aspects, buts et avantages de la présente invention apparaîtront mieux à la lecture de la description suivante de deux modes de réalisation de celle-ci, données à titre d'exemple non limitatif et fait en référence aux dessins annexés. Les figures ne respectent pas nécessairement l'échelle de tous les élements représentés de sorte à améliorer leur lisibilité. Dans la suite de la description, par souci de simplification, des élements identiques, similaires ou équivalents des différentes formes de réalisation portent les mêmes références numériques.
La figure 1 illustre une vue schématique d'une coupe transversale d'un revêtement de décontamination selon un premier mode de réalisation de l'invention.
La figure 2 illustre une vue schématique du revêtement de décontamination dans une position enroulée sur lui-même en vue de préparer son conditionnement.
La figure 3 illustre une vue schématique d'une coupe transversale d'un revêtement de décontamination selon un second mode de réalisation de l'invention.

### Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

A défaut de stipulation contraire, le terme « sensiblement » signifie, dans le présent document, « exactement ou à 10% ou à 10° près ».

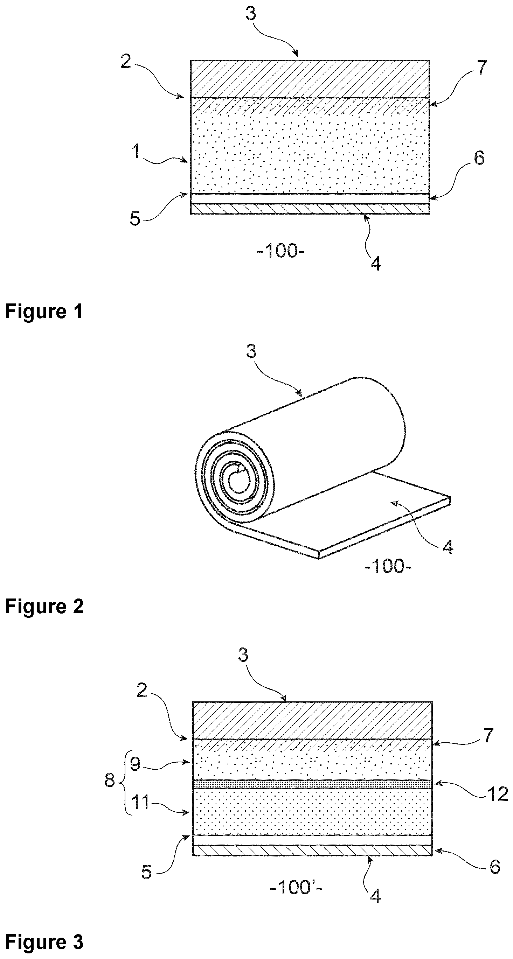

Comme illustré sur la figure 1, le revêtement de décontamination 100 comprend un support 1 sur la face supérieure 2 duquel est formée une couche de piégeage 3 et un film de maintien 4 solidarisé à la face inférieure 5 du support 1 par l'intermédiaire d'un film adhésif 6. Le support 1 comprend une couche de matériau poreux obtenu par un polymère moussé tel qu'une mousse de polyuréthane. Le support 1 peut également un matériau non-tissé à base de polyester apte à remplir le même rôle dans le revêtement de décontamination 100 qu'une mousse de polyuréthane. Le support 1 est suffisamment souple pour pouvoir s'enrouler sur lui-même (se reporter à la figure 2), même une fois solidarisé à la couche de piégeage 3 et au film de maintien 4, ce qui facilite son conditionnement, notamment lorsqu'il est fabriqué sous forme de bande continue.

La couche de piégeage 3, destinée à être mise en contact avec les contaminants toxiques, est formée par enduction sur la surface supérieure 2 du support 1. La couche de piégeage 3 se présente sous la forme d'un hydrogel obtenu par photo-polymérisation d'une solution précurseur comprenant :
- au moins un monomère comprenant un groupe (alkyl)acrylique, (alkyl)acrylate ou (alkyl)acrylamide,
- au moins un agent de réticulation comprenant au moins deux groupes choisis parmi les groupes (alkyl)acrylique, (alkyl)acrylate ou (alkyl)acrylamide,
- au moins un amorceur de photo-polymérisation
- et au moins un agent choisi parmi les halogénures alcalins, les phosphates alcalins, les sulfates alcalins et les mélanges de ceux-ci, tout ceci étant dilué dans un solvant protique, tel que l'eau.

La solution précurseur est déposée par enduction et pénètre dans la subsurface supérieure du support 1 poreux sur quelques dixièmes de mm, par simple gravité, le temps de réaliser la photo-polymérisation. Ceci génère la formation d'une portion 7 de couche de piégeage 3 imprégnée dans le support 1, ce qui permet une bonne adhérence entre ce dernier et la couche de piégeage 3.

Le film de maintien 4 est adhésivé à la face inférieure 5 du support 1 avant l'enduction de la solution précurseur de sorte à compléter et atteindre une rigidité nécessaire au support 1 pour qu'il conserve sa forme (couche s'étendant dans un plan et comportant au moins deux cotés parallèles) et sa planéité pendant les étapes de formation de la couche de piégeage 3.

La figure 3 illustre un revêtement de décontamination 100' selon le second mode de réalisation de l'invention. Il diffère du précédent notamment en ce que le support 1 comprend un ensemble bicouche 8, à base de mousse de polyuréthane, présentant une couche supérieure 9 sur laquelle la couche de piégeage 3 est formée et une couche inférieure 11 adsorbante collée à la couche supérieure 9 par l'intermédiaire d'un film de collage 12 thermofusible. La couche inférieure 11 adsorbante est une couche à base de mousse de polyuréthane imprégnée par du charbon actif. Cette configuration est notamment configurée pour améliorer la décontamination en présence de composés contaminants plus volatiles ou tout du moins qui sont capables de migrer à travers l'épaisseur du revêtement de décontamination 100, 100'.

L'invention va être, à présent, décrite à la lumière des exemples ci-dessous, ces exemples n'étant fournis qu'à titre d'illustration de l'invention et n'en constituant en aucun cas une limitation.

Des tests de décontamination sont ainsi réalisés par la direction générale de l'armement français (DGA) à partir d'échantillons 200, 200' des deux types de revêtement de décontamination 100, 100' (sans et avec charbon actif) vis-à-vis des gaz de combats organophosphorés selon les recommandations de la norme AEP-65 (norme OTAN), adaptées notamment aux spécificités des échantillons 200, 200'.

Des échantillons 200, 200' présentant une surface de 5x5 cm² et comprenant une épaisseur comprise entre 3 et 4 mm sont sortis de leur emballage juste avant la réalisation des tests de décontamination.

Un exemple de préparation d'une solution précurseur d'une couche de piégeage 3 conformément à un mode de réalisation de l'invention est décrit ci-dessous.

Dans un pilulier de 30 ml, préalablement séché en étuve une nuit à 90°C sous vide dynamique et conditionné sous argon sont introduits, successivement, 10,4 mL de N,N'-diméthylacrylamide, 11,0 ml d'eau distillée, 0,35 mL de poly(éthylèneglycol)diméthacrylate de masse molaire moyenne de 750 g/mol, 0,25 g d'IRGACURE^{®} 184 et 0,25 g de fluorure de potassium.

Un barreau aimanté est introduit dans le milieu résultant. Le milieu est ensuite purgé à l'argon et mis sous agitation magnétique jusqu'à dissolution complète des composés solides, tels que l'IRGACURE^{®} 184 et le fluorure de potassium.

La solution précurseur est déposée par enduction sur la surface supérieure 2 du support 1,8. La gélification complète de la solution précurseur est atteinte après 9 minutes d'insolation avec une lampe UV émettant une longueur d'onde de 405 nm avec une puissance de 9000 W/m². L'hydrogel ainsi formé permet d'obtenir les revêtements de décontamination 100, 100'.

En parallèle, les composés contaminants sont disposés sur un support en PEHD (Polyéthylène Haute Densité), présentant une surface plane. Une fois les supports contaminés, ils sont disposés dans une enceinte hermétique thermo-régulée à environ 30°C pendant 90 min.

Puis, le revêtement de décontamination 100, 100' est placé sur la surface du support contaminé avec l'exercice d'une pression (20g/cm2) et l'ensemble maintenu sous pression est placé pendant 1 heure dans une enceinte thermo-régulée à environ 30°C.

Le revêtement de décontamination 100,100' est ensuite placé dans solvant de sorte à y dissoudre les composés contaminants que le revêtement de décontamination 100,100' a piégés. La solution de solvant est ensuite analysée par chromatographie en phase gazeuse / ou liquide en fonction du contaminant afin de procéder aux calculs de la quantité de contaminant piégée dans le revêtement de décontamination 100,100'.

Ces tests sont répétés à cinq reprises pour chacun de trois composés chimiques toxiques organophosphorés (composés A, B et C) et ce avec un échantillon 200 du revêtement de décontamination 100 sans charbon actif, un échantillon 200' du revêtement de décontamination 100' avec charbon actif et avec une couche de décontamination ne comprenant que le matériau de la couche de piégeage 3 (que l'on nommera par la suite le revêtement hydrogel).

Les résultats de ces tests illustrés dans le tableau 1 ci-dessous rapportent l'efficacité de la décontamination de l'échantillon 200 vis-à-vis du revêtement hydrogel seul (pour les mêmes natures de matériau de la couche de piégeage) et l'efficacité de décontamination de l'échantillon 200' vis-à-vis du revêtement hydrogel seul (se référer notamment au document EP3740514 pour la mise en application de l'hydrogel seul).

**[Table 1]**

| Revêtements considérés | Taux d'amélioration de la décontamination vis-à-vis du Composé A | Taux d'amélioration de la décontamination vis-à-vis du Composé B | Taux d'amélioration de la décontamination vis-à-vis du Composé C |
|---|---|---|---|
| Echantillon 200/ revêtement hydrogel seul | 97,00% | 65,00% | 63,00% |
| Echantillon 200'/ revêtement hydrogel seul | 100,00% | 88,00% | 94,00% |

Les tests de décontamination réalisés montrent que les revêtements de décontamination 100 (échantillon 200), 100' (échantillon 200') sont plus efficaces que l'utilisation d'un revêtement d'hydrogel seul (par exemple 97% d'amélioration de la décontamination sont constatés entre l'échantillon 200 et le revêtement hydrogel seul vis à vis du composé A). Le revêtement de décontamination 100' comprenant le charbon actif est particulièrement efficace pour décontaminer des contaminants organophosphorés présents sur support lisse.

Par ailleurs, après un an de conditionnement des échantillons 200, 200' de revêtements de décontamination 100,100' dans les dispositifs de conditionnement précédemment décrits, les résultats des tests montrent un même niveau de décontamination. Il est ainsi possible de conclure que la couche de piégeage 3 ne subit pas de vieillissement sur cette durée dans ces conditions de conditionnement.

Ainsi, la présente invention propose des revêtements de décontamination très efficaces à l'encontre de composés chimiques toxiques, notamment des organosphorés, qui sont stables dans le temps et simple à fabriquer, notamment sous forme de bande qui pourra être découpée selon les usages souhaités.

## Revendications

1. Revêtement de décontamination (100,100') destiné à piéger des composés chimiques toxiques, par recouvrement d'une surface contaminée avec le revêtement de décontamination, le revêtement de décontamination comprenant une structure multicouche comportant :
- un support (1),
- une couche de piégeage (3) formée sur une face supérieure (2) du support (1), la couche de piégeage (3) étant destinée à être mise en contact avec les composés chimiques toxiques de sorte à les piéger, et
- un film de maintien (4) solidarisé à une face inférieure (5) du support (1) opposée à la face supérieure (2), le film de maintien (4) étant destiné à maintenir la forme du support (1) dans le plan et dans une direction transversale au plan, pendant la formation de la couche de piégeage (3).

2. Revêtement de décontamination (100,100') selon la revendication 1, dans lequel la couche de piégeage (3) est une couche d'hydrogel formée par :
- dépôt d'une solution précurseur de la couche de piégeage (3), sur la face supérieure (2) du support (1), et
- polymérisation de la solution précurseur,
la solution précurseur comprenant au moins un solvant protique, au moins un monomère comprenant un groupe (alkyl)acrylique, (alkyl)acrylate ou (alkyl)acrylamide, au moins un agent de réticulation comprenant au moins deux groupes choisis parmi les groupes (alkyl)acrylique, (alkyl)acrylate ou (alkyl)acrylamide, au moins un amorceur de photo-polymérisation et au moins un agent choisi parmi les halogénures alcalins, les phosphates alcalins, les sulfates alcalins et les mélanges de ceux-ci.

3. Revêtement de décontamination (100,100') selon la revendication 1 ou 2, dans lequel le support (1) est formé d'au moins une couche de polymère moussé.

4. Revêtement de décontamination (100,100') selon l'une des revendications 1 à 3, dans lequel, le support (1) comprend une subsurface supérieure comportant une portion (7) de couche de piégeage (3) imprégnée dans le support (1).

5. Revêtement de décontamination (100,100') selon l'une des revendications 1 à 4, dans lequel le support (1) est formé d'au moins une couche de mousse de polyuréthane.

6. Revêtement de décontamination (100') selon l'une des revendications 1 à 5, dans lequel le support (1) est un ensemble multicouche (8) comprenant une couche supérieure (9) et une couche inférieure (11) adsorbante, la couche inférieure (11) adsorbante étant apte à adsorber les composés chimiques toxiques.

7. Revêtement de décontamination (100') selon la revendication 6, dans lequel la couche inférieure (11) adsorbante comprend au moins une mousse de polyuréthane imprégnée par un matériau poreux adsorbant.

8. Revêtement de décontamination (100') selon la revendication 7, dans lequel le matériau poreux adsorbant comprend du charbon actif.

9. Revêtement de décontamination (100') selon l'une des revendications 6 à 8, lequel comprend un film de collage (12) entre la couche inférieure (11) adsorbante et la couche supérieure (9).

10. Ensemble de décontamination comprenant le revêtement de décontamination (100,100') selon l'une des revendications 1 à 9 et un dispositif de conditionnement pour la conservation du revêtement de décontamination, le dispositif de conditionnement étant formé par un ensemble multicouche comprenant au moins une couche d'aluminium et une couche de PET (PolyEthylène Téréphtalate).

11. Procédé de fabrication du revêtement de décontamination (100,100') selon l'une des revendications 1 à 9, le procédé comprenant les étapes suivantes :
a) fourniture d'un film de maintien (4),
b) solidarisation de la face inférieure (5) du support (1) au film de maintien (4),
c) dépôt d'une solution de précurseur de la couche de piégeage (3) sur la face supérieure (2) du support (1), et
d) photo-polymérisation de la solution précurseur de sorte à obtenir la couche de piégeage (3).
